# EUROPÄISCHE PATENTSCHRIFT

(11) **EP 2 462 676 B1**
(45) Veröffentlichungstag und Bekanntmachung des Hinweises auf die Patenterteilung: **21.11.2018**
(21) Anmeldenummer: 10726040.8
(22) Anmeldetag: 07.06.2010
(51) Int. Cl.: H02J 7/00, H02J 9/00

(54) **LADEVORRICHTUNG MIT EINEM LEISTUNGSTEIL**
CHARGING DEVICE HAVING A POWER ELEMENT
CHARGEUR À ÉLÉMENT DE PUISSANCE

(30) Priorität: 06.08.2009 DE 102009028301
(43) Veröffentlichungstag der Anmeldung: 13.06.2012
(73) Patentinhaber: Robert Bosch GmbH, 70442 Stuttgart (DE)
(72) Erfinder: OSSWALD, Alexander, 70599 Stuttgart (DE)
(86) Internationale Anmeldenummer: PCT/EP2010/057903
(87) Internationale Veröffentlichungsnummer: WO 2011/015392

(56) Entgegenhaltungen:
- EP-A1- 2 073 341
- EP-A2- 1 819 027
- DE-A1- 10 100 767

## Beschreibung

### Stand der Technik

Die vorliegende Erfindung betrifft eine Ladevorrichtung mit einem Leistungsteil zur Erzeugung einer Ladespannung zum Aufladen eines Akkupacks aus einer von einer Eingangsspannungsquelle bereitgestellten Eingangsspannung, wobei das Leistungsteil und die Eingangsspannungsquelle über eine von einer Steuereinheit ansteuerbare Trennvorrichtung elektrisch leitend miteinander verbindbar sind und die Trennvorrichtung dazu ausgebildet ist, in einem zugeordneten Schaltmodus eine elektrisch leitende Verbindung zwischen dem Leistungsteil und der Eingangsspannungsquelle herzustellen und in einem zugeordneten Trennmodus diese elektrisch leitende Verbindung zu trennen.

Die DE 101 00 767 A1 beschreibt eine derartige Ladevorrichtung, bei der das Leistungsteil beim Betrieb in einem zugeordneten Bereitschaftsmodus, d. h. im Standby-Betrieb, durch Öffnen eines mechanischen Schalters von einem eingangsseitigen Spannungsversorgungsnetz getrennt ist. Bei Herstellen einer elektrisch leitenden Verbindung zwischen der Ladevorrichtung und einem aufzuladenden Akkupack detektiert ein der Ladevorrichtung zugeordneter Strom- oder Spannungsdetektor das Akkupack und aktiviert mit dessen Restspannung die Steuereinheit, um ein Schließen des mechanischen Schalters und somit einen Übergang der Ladevorrichtung in einen zugeordneten Ladebetrieb zum Aufladen des Akkupacks zu bewirken.

Nachteilig am Stand der Technik ist, dass insbesondere die Detektierung von tiefentladenen Akkupacks kritisch ist und fehlerbehaftet sein kann. Auch kann eine vorhandene Restspannung des Akkupacks möglicherweise nicht zur Aktivierung der Steuereinheit ausreichen, sodass ein sicheres und zuverlässiges Aufladen des Akkupacks nicht in allen Fällen gewährleistet werden kann.

Aus der EP 2 073 341 A1 ist zudem ein Wechselspannungsnetzteil für ein elektrisches Gerät mit einer Energiespareinheit bekannt. Die Energiespareinheit weist eine Verbindungserfassungseinheit zur Erkennung einer mechanischen Verbindung zwischen dem Wechselspannungsnetzteil und dem elektrischen Gerät auf. Die Verbindungserfassungseinheit ist nach Art eines mechanischen Tasters ausgebildet, der automatisch betätigt wird, wenn das elektrische Gerät mit dem Netzteil verbunden wird. In diesem Fall wird ein Schalter zur Stromversorgung des elektrischen Geräts geschlossen. Wird das elektrische Gerät mechanisch vom Netzteil getrennt, wird der Schalter zur Unterbrechung des Versorgungsstromkreises und zum Sparen von Energie geöffnet.

### Offenbarung der Erfindung

Eine Aufgabe der Erfindung ist es daher, eine neue Ladevorrichtung zum Aufladen eines Akkupacks bereit zu stellen, mit der ein sicheres und zuverlässiges Aufladen des Akkupacks gewährleistet werden kann.

Dieses Problem wird gelöst durch eine Ladevorrichtung mit einem Leistungsteil zur Erzeugung einer Ladespannung zum Aufladen eines Akkupacks aus einer von einer Eingangsspannungsquelle bereitgestellten Eingangsspannung. Das Leistungsteil und die Eingangsspannungsquelle sind über eine von einer Steuereinheit ansteuerbare Trennvorrichtung elektrisch leitend miteinander verbindbar. Die Trennvorrichtung ist dazu ausgebildet, in einem zugeordneten Schaltmodus eine elektrisch leitende Verbindung zwischen dem Leistungsteil und der Eingangsspannungsquelle herzustellen und in einem zugeordneten Trennmodus diese elektrisch leitende Verbindung zu trennen. Die Steuereinheit ist zumindest zur Standby-Stromversorgung mit einem zugeordneten Energiespeicher verbunden und dazu ausgebildet, die Trennvorrichtung beim Übergang von einem Ladebetrieb zu einem Standby-Betrieb der Ladevorrichtung anzusteuern, um die Trennvorrichtung vom Schaltmodus in den Trennmodus umzuschalten und dazu, den Ladebetrieb und den Standby-Betrieb der Ladevorrichtung zu detektieren und das Leistungsteil im Ladebetrieb zur Erzeugung der Ladespannung anzusteuern. Erfindungsgemäß ist die Steuereinheit dazu ausgebildet, den Ladebetrieb der Ladevorrichtung für den Fall zu detektieren, dass der Akkupack mit der Ladevorrichtung elektrisch leitend verbunden und aufzuladen ist, wobei die Steuereinheit die Trennvorrichtung in den Schaltmodus zum Aufladen des Akkupacks umschaltet und die Stromversorgung der Steuereinheit über das Leistungsteil erfolgt.

Die Erfindung ermöglicht die Bereitstellung einer Ladevorrichtung, bei der eine Leistungsaufnahme von der Eingangsspannungsquelle im Standby-Betrieb vollständig verhindert wird. Weiterhin können ein Übergang vom Standby-Betrieb der Ladevorrichtung in den Ladebetrieb einfach und präzise bestimmt sowie ein einfaches und schnelles Aktivieren der Ladevorrichtung und eine sichere und zuverlässige Steuerung der Ladevorrichtung gewährleistet werden.

Gemäß einer Ausführungsform ist die Steuereinheit dazu ausgebildet, einen dem Energiespeicher zugeordneten Ladezustand zu detektieren. Die Erfindung ermöglicht somit eine kontinuierliche Überwachung der Standby-Stromversorgung des Energiespeichers.

Die Steuereinheit ist bevorzugt dazu ausgebildet, einen Alarm auszulösen, falls der Ladezustand einen vorgegebenen Schwellwert unterschreitet. Somit kann auf einfache Art und Weise auf einen unzureichenden Ladezustand des Energiespeichers hingewiesen werden.

Gemäß einer Ausführungsform ist der Energiespeicher über einen zugeordneten Batterieschacht in die Ladevorrichtung einführbar ist. Die Erfindung ermöglicht somit ein einfaches und schnelles Austauschen des Energiespeichers, falls dieser einen unzureichenden Ladezustand aufweist.

Gemäß einer Ausführungsform ist der Energiespeicher ein Akkumulator, wobei die Steuereinheit dazu ausgebildet ist, die Trennvorrichtung zur Umschaltung vom Trennmodus in den Schaltmodus anzusteuern, falls der Ladezustand des Akkumulators den vorgegebenen Schwellwert unterschreitet, um einen Übergang der Ladevorrichtung vom Standby-Betrieb in den Ladebetrieb zur Erzeugung einer Ladespannung zum Aufladen des Akkumulators zu ermöglichen. Die Erfindung ermöglicht somit, auf einfache und kostengünstige Art und Weise fortwährend einen ausreichenden Ladezustand des Energiespeichers zum Standby-Betrieb der Steuereinheit zu gewährleisten.

Bevorzugt ist eine von der Steuereinheit ansteuerbare Anzeige zur Anzeige des Ladezustands und/oder zur Ausgabe eines visuellen Alarms vorgesehen. Somit kann eine Visualisierung eines jeweiligen Ladezustands des Energiespeichers ermöglicht werden.

Die Trennvorrichtung weist bevorzugt ein mechanisches Relais auf. Somit kann eine einfache und kostengünstige Trennvorrichtung realisiert werden.

Alternativ weist die Trennvorrichtung vorzugsweise mindestens einen Halbleiterschalter auf. Somit kann eine sichere und zuverlässige Trennvorrichtung realisiert werden.

### Kurze Beschreibung der Zeichnungen

Die Erfindung ist anhand von einem in der Zeichnung dargestellten Ausführungsbeispiel in der nachfolgenden Beschreibung näher erläutert. Es zeigt:

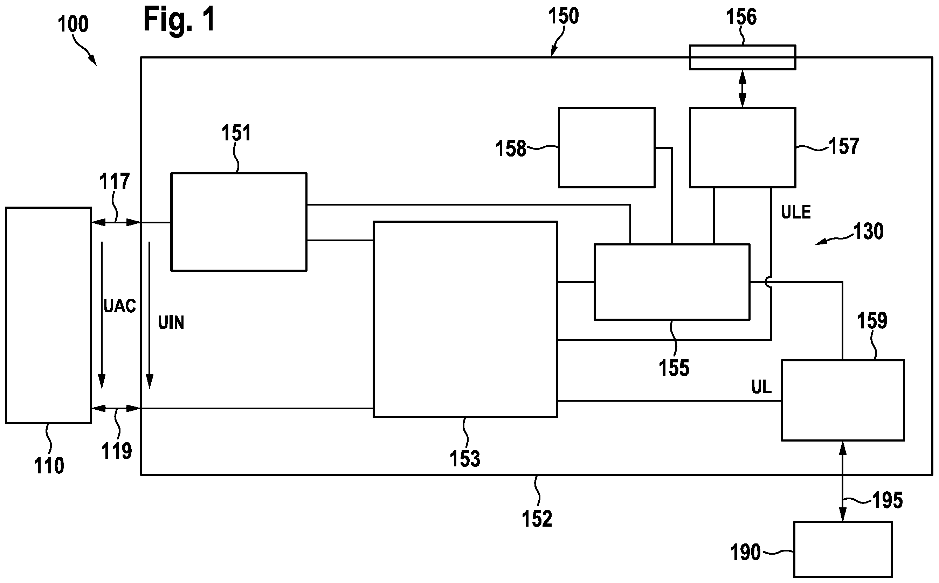

Fig. 1 ein vereinfachtes Prinzipschaltbild einer Anordnung mit einer Ladevorrichtung gemäß einer Ausführungsform.

### Beschreibung des Ausführungsbeispiels

Fig. 1 zeigt schematisch eine Anordnung 100 mit einer Ladevorrichtung 150 zum Aufladen eines Akkupacks 190. Die Ladevorrichtung 150 hat beispielhaft ein Gehäuse 152, in dem ein Leistungsteil 153 angeordnet ist, das aus einer elektrischen Eingangsspannung UIN eine elektrische Ausgangsspannung UL erzeugt. Der Ladevorrichtung 150 ist gemäß einer Ausführungsform eine bevorzugt ebenfalls in dem Gehäuse 152 angeordnete Steuerschaltung 130 zur Steuerung einer dem Leistungsteil 153 zugeführten elektrischen Energie zugeordnet.

Es wird darauf hingewiesen, dass die Beschreibung der Verwendung der Steuerschaltung 130 bei der Ladevorrichtung 150 lediglich beispielhaften Charakter hat und nicht zur Einschränkung der Erfindung dient. Vielmehr kann die Steuerschaltung 130 z. B. in jeglicher Art von Netzgerät bzw. Netzteil Anwendung finden, in dem ein Leistungsteil zur Erzeugung einer elektrischen Ausgangsspannung zum Betrieb eines elektrischen Verbrauchers verwendet wird. Beispielsweise könnte die Steuerschaltung 130 in einem Netzteil eines tragbaren Computers Anwendung finden, bei dem das Netzteil in einen Standby-Betrieb umschaltbar ist, für den Fall, dass der Computer ausgeschaltet und ein diesem zugeordneter Akkupack aufgeladen ist.

Gemäß einer Ausführungsform ist die Ladevorrichtung 150 zur Spannungsversorgung mit einer Eingangsspannungsquelle 110 verbindbar, wie mit Pfeilen 117, 119 angedeutet. Die Eingangsspannungsquelle 110 ist beispielhaft als Wechselspannungsquelle ausgebildet, die z. B. einem Wechselspannungsversorgungsnetz zugeordnet ist und eine Eingangswechselspannung UAC bereitstellt. Es ist jedoch ebenso möglich, die Ladevorrichtung 150 an einer Gleichspannungsquelle zu betreiben, wozu einfache, eingangsseitige Modifizierungen der in Fig. 1 abgebildeten Ladevorrichtung 150 erforderlich sein können, die dem Fachmann geläufig sind. Die Eingangswechselspannung UAC wird bevorzugt in eine Gleichspannung, die in Fig. 1 als die Eingangsspannung UIN gekennzeichnet ist, umgewandelt, z. B. mit einem eingangsseitig an der Ladevorrichtung 150 vorgesehenen Brückengleichrichter. Da eine derartige Maßnahme dem Fachmann geläufig ist, wurde in Fig. 1 zur Vereinfachung der Darstellung auf die Abbildung eines geeigneten Brückengleichrichters verzichtet.

Die Eingangsspannungsquelle 110 ist mit dem Leistungsteil 153 und mit einer Trennvorrichtung 151 verbunden. Das Leistungsteil 153 ist illustrativ mit einer zugeordneten Steuereinheit 155, einem Energiespeicher 157 und einer Kontakteinheit 159 verbunden. Die Trennvorrichtung 151 ist mit dem Leistungsteil 153 und der Steuereinheit 155 verbunden. Diese ist mit dem Energiespeicher 157, der Kontakteinheit 159 und einer Anzeige 158 verbunden. Die Kontakteinheit 159, der Energiespeicher 157, die Trennvorrichtung 151 und die Steuereinheit 155 bilden die Steuerschaltung 130 aus.

Gemäß einer Ausführungsform ist das Leistungsteil 153 als Blech-Transformator oder als Schaltnetzteil ausgebildet. Es wird jedoch darauf hingewiesen, dass die Verwendung eines derartigen Transformators bzw. Schaltnetzteils lediglich beispielhaften Charakter hat und nicht als Einschränkung der Erfindung zu verstehen ist. Vielmehr können zur Realisierung des Leistungsteils 153 alle Arten von Leistungsteilen Anwendung finden, die dazu geeignet sind, aus der Eingangsspannung UIN die Ausgangsspannung UL zu erzeugen.

Die Kontakteinheit 159 ist beispielhaft dazu ausgebildet, eine elektrische Kontaktierung des Akkupacks 190 an der Ladevorrichtung 150 zu ermöglichen, wie mit einem Pfeil 195 angedeutet, um somit eine elektrisch leitende Verbindung zwischen dem Akkupack 190 und dem Leistungsteil 153 herzustellen. Illustrativ ist die Kontakteinheit 159 als eine/ein an dem Gehäuse 152 der Ladevorrichtung 150 vorgesehene(r) Ladebucht bzw. -schacht für den Akkupack 190 ausgebildet.

Der Energiespeicher 157 ist beispielhaft zumindest zur Standby-Stromversorgung der Steuereinheit 155 ausgebildet, d. h. zur Stromversorgung der Steuereinheit 155 im Standby-Betrieb der Ladevorrichtung 150. Im Normal- bzw. Ladebetrieb der Ladevorrichtung 150 erfolgt die Stromversorgung der Steuereinheit 155 vorzugsweise über das Leistungsteil 153.

Gemäß einer Ausführungsform ist der Energiespeicher 157 eine Batterie, die über einen an dem Gehäuse 152 vorgesehenen Batterieschacht 156 in die Ladevorrichtung 150 einführbar ist. Alternativ hierzu kann der Energiespeicher 157 ein Akkumulator sein, z. B. ein NiCd, NiMH, Li-Ion oder sonstiger Akkumulator oder ein Supercap, der mit einer von dem Leistungsteil 153 im Normal- bzw. Ladebetrieb der Ladevorrichtung 150 erzeugten Ladespannung ULE aufladbar ist.

Gemäß einer Ausführungsform ist die Trennvorrichtung 151 in einem zugeordneten Schaltmodus und einem zugeordneten Trennmodus betreibbar. Im Schaltmodus stellt die Trennvorrichtung 151 eine elektrisch leitende Verbindung zwischen dem Leistungsteil 153 und der Eingangsspannungsquelle 110 her und im Trennmodus trennt sie diese elektrisch leitende Verbindung. Ein Umschalten zwischen Schalt- und Trennmodus erfolgt z. B. durch eine geeignete Ansteuerung durch die Steuereinheit 155.

Die Trennvorrichtung 151 kann beispielhaft mit einem mechanischen Relais, z. B. einem Schütz oder einem Impulsrelais, realisiert werden. Es ist ebenfalls möglich, die Trennvorrichtung 151 mit Halbleiterschaltern bzw. einer Halbleiterschaltung zu realisieren, die z. B. einen oder mehrere Triac, Thyristoren und/oder Transistoren aufweist. Darüber hinaus ist es ebenfalls möglich, die Trennvorrichtung 151 mit einem mechanischen Relais und zugeordneten Halbleiterelementen, insbesondere Halbleiterschaltern, zu realisieren. Es ist jedoch auch möglich, die Trennvorrichtung 151 mit beliebigen anderen Elementen zu realisieren, solange die oben beschriebene Funktionalität gewährleistet ist.

Die Steuereinheit 155 ist beispielhaft als Ladekontroller bzw. Ladeelektronik ausgeführt. Diese ist bevorzugt dazu ausgebildet, den Ladebetrieb und den Standby-Betrieb der Ladevorrichtung 150 zu detektieren und das Leistungsteil 153 im Ladebetrieb zur Erzeugung der Ausgangsspannung UL anzusteuern. Insbesondere ist die Ladeelektronik 155 dazu ausgebildet, einen dem zu ladenden Akkupack 190 zugeordneten Akkutyp sowie einen Betriebszustand der Ladevorrichtung 150, z. B. einen Betrieb im Leerlauf, mit oder ohne angeschlossenem Akkupack 190 sowie mit geladenem Akkupack 190, zu erkennen und in Abhängigkeit von einem jeweils erkannten Akkutyp bzw. Betriebszustand die Trennvorrichtung 151 und/oder das Leistungsteil 153 anzusteuern. Hierbei kann die Trennvorrichtung 151 z. B. potentialgetrennt über einen der Ladeelektronik 155 zugeordneten Optokoppler und/oder Übertrager angesteuert werden. Da die Funktionsweise sowie eine Realisierung einer geeigneten Ladeelektronik einem Fachmann ausreichend bekannt ist, wird hier auf eine eingehende Beschreibung der Ladeelektronik 155 verzichtet.

Des Weiteren kann die Ladeelektronik 155 zur Bestimmung eines dem Energiespeicher 157 zugeordneten Ladezustands ausgebildet sein, sowie zur Auslösung eines zugeordneten Alarms, falls dieser einen vorgegebenen Schwellwert unterschreitet. Dieser Schwellwert ist bevorzugt derart gewählt, dass bei einer Unterschreitung die Ausgabe eines Alarms noch möglich ist, aber eine ausreichende Standby-Stromversorgung der Ladeelektronik 155 nur noch für einen kurzen vorgegebenen Zeitraum gewährleistet werden kann. Eine Anzeige des bestimmten Ladezustands und/oder eine Ausgabe eines visuellen Alarms kann z. B. auf der Anzeige 158 erfolgen, die hierzu von der Ladeelektronik 155 ansteuerbar ist. Es wird jedoch darauf hingewiesen, dass die Ausgabe eines visuellen Alarms lediglich beispielhaft und nicht zur Einschränkung der Erfindung beschrieben ist. Vielmehr können auch andere Alarmtypen Anwendung finden, z. B. eine Ausgabe eines auditiven Alarms.

Im Betrieb der Ladevorrichtung 150 bestimmt die Ladeelektronik 155, ob der Akkupack 190 elektrisch leitend mit der Kontakteinheit 159 verbunden bzw. in den Ladeschacht 159 eingelegt ist und aufzuladen ist. Falls ein entsprechender Ladevorgang durchzuführen ist, initiiert die Ladeelektronik 155 einen Normal- bzw. Ladebetrieb, in dem die Trennvorrichtung 151 im Schaltmodus betrieben wird und die Stromversorgung der Ladeelektronik 155 über das Leistungsteil 153 erfolgt.

Dann bestimmt die Ladeelektronik 155 z. B. einen dem Akkupack 190 zugeordneten Akkutyp und steuert in Abhängigkeit von dem bestimmten Akkutyp das Leistungsteil 153 zur Erzeugung einer geeigneten Ausgangsspannung UL an, die der Kontakteinheit 159 und somit dem Akkupack 190 zur Aufladung als Ladespannung UL zugeführt wird. Diese kann beispielhaft in einem Bereich von 10 V bis 42 V liegen. Alternativ hierzu kann die Ladeelektronik 155 das Leistungsteil 153 auch zur Erzeugung eines geeigneten Ausgangs- bzw. Ladestroms ansteuern. Darüber hinaus steuert die Ladeelektronik 155 für den Fall, dass der Energiespeicher 157 ein Akkumulator ist, das Leistungsteil 153 derart an, das dieses die Ladespannung ULE erzeugt, um somit ein Aufladen des Akkumulators zu bewirken.

Falls kein Ladevorgang durchzuführen ist, bzw. nach dem Ladebetrieb, geht die Ladevorrichtung 150 in einen Bereitschaftsmodus bzw. einen Standby-Betrieb über. Hierzu steuert die Ladeelektronik 155 die Trennvorrichtung 151 an, um diese vom Schaltmodus in den Trennmodus umzuschalten. Hierdurch wird die elektrisch leitende Verbindung zwischen dem Leistungsteil 153 und der Eingangsspannungsquelle 110 getrennt, sodass die Leistungsaufnahme des Leistungsteils 153 im Standby-Betrieb auf 0 W abgesenkt wird. Die Stromversorgung der Ladeelektronik 155 wird nun von dem Energiespeicher 157 gewährleistet, wobei die Ladeelektronik 155 in einem Modus geringsten Energiebedarfs betrieben wird, bei dem noch eine volle Funktionsfähigkeit der Ladeelektronik 155 bewirkt wird. Diese volle Funktionsfähigkeit umfasst insbesondere die zumindest wiederholte, vorzugsweise regelmäßige und bevorzugt kontinuierliche Bestimmung des Ladezustands des Energiespeichers 157.

Falls der Ladezustand des Energiespeichers 157 einen zugeordneten Schwellwert unterschreitet, löst die Ladeelektronik 155 einen entsprechenden Alarm aus. Der Alarm und/oder der Ladezustand können auf der Anzeige 158 angezeigt werden. Darüber hinaus kann der Ladezustand auch kontinuierlich auf der Anzeige 158 angezeigt werden.

Für den Fall, dass der Energiespeicher 157 eine Batterie ist, deren Ladezustand den zugeordneten Schwellwert im Lade- oder Standby-Betrieb der Ladevorrichtung 150 unterschreitet, kann diese über den Batterieschacht 156 ausgetauscht werden. Für den Fall, dass der Energiespeicher 157 ein Akkumulator ist, wird dieser wie oben beschrieben im Ladebetrieb der Ladevorrichtung 150 aufgeladen. Falls der Ladezustand dieses Akkumulators im Standby-Betrieb der Ladevorrichtung 150 den zugeordneten Schwellwert unterschreitet, steuert die Ladeelektronik 155 gemäß einer Ausführungsform die Trennvorrichtung 151 zur Umschaltung vom Trennmodus in den Schaltmodus an. Somit wird eine elektrisch leitende Verbindung zwischen dem Leistungsteil 153 und der Eingangsspannungsquelle 110 hergestellt, falls die Ladevorrichtung 150 an die Eingangsspannungsquelle 110 angeschlossen ist, sodass die Ladevorrichtung 150 vom Standby-Betrieb in den Normal- bzw. Ladebetrieb übergeht, sodass das Leistungsteil 153 die Ladespannung ULE zum Aufladen des Akkumulators erzeugt. Die Ladespannung ULE wird bevorzugt nur für einen vergleichsweise kurzen Zeitraum erzeugt, z. B. eine bis drei Stunden, um eine ausreichende Aufladung des Akkumulators zu gewährleisten. Es wird jedoch darauf hingewiesen, dass bei einer entsprechenden Ausgestaltung des Akkumulators mit einer vergleichsweise großen Kapazität und sehr geringer Selbstentladung eine derartige Aufladung im Mittel nur etwa einmal jährlich erforderlich sein sollte.

Wird im Standby-Betrieb der Ladevorrichtung 150 der aufgeladene Akkupack 190 aus dem Ladeschacht 159 entnommen, wird der Standby-Betrieb fortgesetzt. Wird dann der Akkupack 190 z. B. nach Entleerung erneut zum Aufladen in den Ladeschacht 159 eingeführt, erkennt die Ladeelektronik 155 wie oben beschrieben den Akkupack 190 und initiiert einen Übergang vom Standby-Betrieb der Ladevorrichtung 150 in deren Normal- bzw. Ladebetrieb durch ein Ansteuern der Trennvorrichtung 151, um diese vom Trennmodus in den Schaltmodus umzuschalten. Dann erfolgt ein erneuter, wie oben beschriebener Ladevorgang.

## Patentansprüche

1. Ladevorrichtung (150) mit einem Leistungsteil (153) zur Erzeugung einer Ladespannung (UL) zum Aufladen eines Akkupacks (190) aus einer von einer Eingangsspannungsquelle (110) bereitgestellten Eingangsspannung (UIN), wobei das Leistungsteil (153) und die Eingangsspannungsquelle (110) über eine von einer Steuereinheit (155) ansteuerbare Trennvorrichtung (151) elektrisch leitend miteinander verbindbar sind und die Trennvorrichtung (151) dazu ausgebildet ist, in einem zugeordneten Schaltmodus eine elektrisch leitende Verbindung zwischen dem Leistungsteil (153) und der Eingangsspannungsquelle (110) herzustellen und in einem zugeordneten Trennmodus diese elektrisch leitende Verbindung zu trennen, wobei die Steuereinheit (155) zumindest zur Standby-Stromversorgung mit einem zugeordneten Energiespeicher (157) verbunden ist und dazu ausgebildet ist, die Trennvorrichtung (151) beim Übergang von einem Ladebetrieb zu einem Standby-Betrieb der Ladevorrichtung (150) anzusteuern, um die Trennvorrichtung (151) vom Schaltmodus in den Trennmodus umzuschalten, und dazu, den Ladebetrieb und den Standby-Betrieb der Ladevorrichtung (150) zu detektieren und das Leistungsteil (153) im Ladebetrieb zur Erzeugung der Ladespannung (UL) anzusteuern, **dadurch gekennzeichnet, dass** die Steuereinheit (155) dazu ausgebildet ist, den Ladebetrieb der Ladevorrichtung (150) für den Fall zu detektieren, dass der Akkupack (190) mit der Ladevorrichtung (150) elektrisch leitend verbunden und aufzuladen ist, wobei die Steuereinheit (155) die Trennvorrichtung (151) in den Schaltmodus zum Aufladen des Akkupacks (190) umschaltet und die Stromversorgung der Steuereinheit (155) über das Leistungsteil (153) erfolgt.

2. Ladevorrichtung nach Anspruch 1, **dadurch gekennzeichnet, dass** die Steuereinheit (155) dazu ausgebildet ist, einen dem Energiespeicher (157) zugeordneten Ladezustand zu detektieren.

3. Ladevorrichtung nach Anspruch 2, **dadurch gekennzeichnet, dass** die Steuereinheit (155) dazu ausgebildet ist, einen Alarm auszulösen, falls der Ladezustand einen vorgegebenen Schwellwert unterschreitet.

4. Ladevorrichtung nach Anspruch 2 oder 3, **dadurch gekennzeichnet, dass** der Energiespeicher (157) eine Batterie ist, die über einen zugeordneten Batterieschacht (156) in die Ladevorrichtung (150) einführbar ist.

5. Ladevorrichtung nach Anspruch 2 oder 3, **dadurch gekennzeichnet, dass** der Energiespeicher (157) ein Akkumulator ist, wobei die Steuereinheit (155) dazu ausgebildet ist, die Trennvorrichtung (151) zur Umschaltung vom Trennmodus in den Schaltmodus anzusteuern, falls der Ladezustand des Akkumulators den vorgegebenen Schwellwert unterschreitet, um einen Übergang der Ladevorrichtung (150) vom Standby-Betrieb in den Ladebetrieb zur Erzeugung einer Ladespannung (ULE) zum Aufladen des Akkumulators zu ermöglichen.

6. Ladevorrichtung nach einem der Ansprüche 2 bis 5, **dadurch gekennzeichnet, dass** eine von der Steuereinheit (155) ansteuerbare Anzeige (158) zur Anzeige des Ladezustands und/oder zur Ausgabe eines visuellen Alarms vorgesehen ist.

7. Ladevorrichtung nach einem der vorhergehenden Ansprüche, **dadurch gekennzeichnet, dass** die Trennvorrichtung (151) ein mechanisches Relais aufweist.

8. Ladevorrichtung nach einem der vorhergehenden Ansprüche 1 bis 6, **dadurch gekennzeichnet, dass** die Trennvorrichtung (151) mindestens einen Halbleiterschalter aufweist.

## Claims

1. Charging apparatus (150) having a power section (153) for generating a charging voltage (UL) for charging a rechargeable battery pack (190) from an input voltage (UIN) provided by an input voltage source (110), wherein the power section (153) and the input voltage source (110) can be electrically conductively connected to one another by means of an isolating apparatus (151), which can be actuated by a control unit (155), and the isolating apparatus (151) is designed to produce an electrically conductive connection between the power section (153) and the input voltage source (110) in an associated switching mode and to isolate said electrically conductive connection in an associated isolating mode, wherein the control unit (155) is connected to an associated energy store (157) at least for standby power supply and is designed to actuate the isolating apparatus (151) during the transition from charging operation to standby operation of the charging apparatus (150) in order to switch the isolating apparatus (151) over from the switching mode to the isolating mode, and in addition, to detect the charging operation and the standby operation of the charging apparatus (150) and to actuate the power section (153) in charging operation in order to generate the charging voltage (UL), **characterized in that** the control unit (155) is designed to detect the charging operation of the charging apparatus (150) for the case that the rechargeable battery pack (190) is electrically conductively connected to the charging apparatus (150) and is to be charged, wherein the control unit (155) switches the isolating apparatus (151) over to the switching mode in order to charge the rechargeable battery pack (190) and the control unit (155) is supplied with power by means of the power section (153).

2. Charging apparatus according to Claim 1, **characterized in that** the control unit (155) is designed to detect a state of charge associated with the energy store (157).

3. Charging apparatus according to Claim 2, **characterized in that** the control unit (155) is designed to trigger an alarm if the state of charge falls below a prescribed threshold value.

4. Charging apparatus according to Claim 2 or 3, **characterized in that** the energy store (157) is a battery, which can be inserted into the charging apparatus (150) by means of an associated battery chamber (156) .

5. Charging apparatus according to Claim 2 or 3, **characterized in that** the energy store (157) is a rechargeable battery, wherein the control unit (155) is designed to actuate the isolating apparatus (151) to switch over from the isolating mode to the switching mode if the state of charge of the rechargeable battery falls below the prescribed threshold value in order to make it possible for the charging apparatus (150) to transition from standby operation to charging operation in order to generate a charging voltage (ULE) in order to charge the rechargeable battery.

6. Charging apparatus according to one of Claims 2 to 5, **characterized in that** a display (158), which can be actuated by the control unit (155), is provided to display the state of charge and/or to output a visual alarm.

7. Charging apparatus according to one of the preceding claims, **characterized in that** the isolating apparatus (151) has a mechanical relay.

8. Charging apparatus according to one of Claims 1 to 6, **characterized in that** the isolating apparatus (151) has at least one semiconductor switch.

## Revendications

1. Dispositif de charge (150) comportant un élément de puissance (153) destiné à créer une tension de charge (UL) pour recharger un bloc de batteries (190) à partir d'une tension d'entrée (UIN) mise à disposition par une source de tension d'entrée (110), l'élément de puissance (153) et la source de tension d'entrée (110) étant susceptibles d'être connectés l'un à l'autre de manière à conduire l'électricité par l'intermédiaire d'un dispositif séparateur (151) amorçable par une unité de commande (155) et le dispositif séparateur (151) étant conçu pour, dans un mode de commutation associé, établir une connexion conductrice d'électricité entre l'élément de puissance (153) et la source de tension d'entrée (110) et dans un mode de séparation associé, pour séparer ladite connexion conductrice d'électricité, au moins pour l'alimentation électrique en mode veille, l'unité de commande (155) étant connectée sur au moins un accumulateur d'énergie (157) associé et étant conçue pour amorcer le dispositif séparateur (151) lors du passage d'un mode charge dans un mode veille du dispositif de charge (150), pour permuter le dispositif séparateur (151) du mode de commutation dans le mode de séparation et pour détecter le mode charge et le mode veille du dispositif de charge (150) et en mode charge, pour amorcer l'élément de puissance (153) pour générer la tension de charge (UL), **caractérisé en ce que** l'unité de commande (155) est conçue pour détecter le mode charge du dispositif de charge (150) dans le cas où le bloc de batteries (190) est connecté de manière à conduire l'électricité avec le dispositif de charge (150) et doit être chargé, l'unité de commande (155) permutant le dispositif séparateur (151) dans le mode de commutation pour charger le bloc de batteries (190) et l'alimentation électrique de l'unité de commande (155) étant assurée par l'intermédiaire de l'élément de puissance (153).

2. Dispositif de charge selon la revendication 1, **caractérisé en ce que** l'unité de commande (155) est conçue pour détecter un état de charge associé à l'accumulateur d'énergie (157).

3. Dispositif de charge selon la revendication 2, **caractérisé en ce que** l'unité de commande (155) est conçue pour déclencher une alarme si l'état de charge est inférieur à une valeur seuil prédéfinie.

4. Dispositif de charge selon la revendication 2 ou 3, **caractérisé en ce que** l'accumulateur d'énergie (157) est une batterie qui, par l'intermédiaire d'un compartiment à batterie (156) associé est insérable dans le dispositif de charge (150).

5. Dispositif de charge selon la revendication 2 ou 3, **caractérisé en ce que** l'accumulateur d'énergie (157) est un accumulateur, l'unité de commande (155) étant conçue pour amorcer le dispositif séparateur (151) pour la permutation du mode de séparation dans le mode de commutation si l'état de charge de l'accumulateur est inférieur à la valeur seuil prédéfinie, pour permettre un passage du dispositif de charge (150) du mode veille dans le mode charge, afin de générer une tension de charge (ULE) pour le chargement de l'accumulateur.

6. Dispositif de charge selon l'une quelconque des revendications 2 à 5, **caractérisé en ce qu'**un affichage (158) amorçable par l'unité de commande (155) est prévu pour afficher l'état de charge et/ou pour délivrer une alarme visuelle.

7. Dispositif de charge selon l'une quelconque des revendications précédentes, **caractérisé en ce que** le dispositif séparateur (151) comporte un relais mécanique.

8. Dispositif de charge selon l'une quelconque des revendications précédentes 1 à 6, **caractérisé en ce que** le dispositif séparateur (151) comporte au moins un interrupteur à semi-conducteur.
